(19) Europäisches Patentamt / European Patent Office / Office européen des brevets

(11) **EP 4 266 907 B1**

(12) **EUROPEAN PATENT SPECIFICATION**

(45) Date of publication and mention
of the grant of the patent:
**25.12.2024 Bulletin 2024/52**

(21) Application number: **21836038.6**

(22) Date of filing: **06.12.2021**

(51) International Patent Classification (IPC):
***A23N 12/08*** *(2006.01)*     ***A23N 12/12*** *(2006.01)*
***A23F 5/04*** *(2006.01)*

(52) Cooperative Patent Classification (CPC):
**A23N 12/08; A23F 5/046; A23N 12/125**

(86) International application number:
**PCT/EP2021/084440**

(87) International publication number:
**WO 2022/135894 (30.06.2022 Gazette 2022/26)**

(54) **METHOD TO CHECK A COFFEE BEANS ROASTING SYSTEM**

VERFAHREN ZUR PRÜFUNG EINES KAFFEEBOHNENRÖSTSYSTEMS

PROCÉDÉ DE VÉRIFICATION D'UN SYSTÈME DE TORRÉFACTION DE GRAINS DE CAFÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2020 EP 20216278**

(43) Date of publication of application:
**01.11.2023 Bulletin 2023/44**

(73) Proprietor: **Société des Produits Nestlé S.A.
1800 Vevey (CH)**

(72) Inventors:
• **MOREND, Joël**
**1553 Châtonnaye (CH)**
• **DUBIEF, Flavien, Florent**
**1424 CHAMPAGNE (CH)**
• **DEGREEF, Thomas, Rudi, S.**
**1850 Grimbergen (BE)**

• **CELIS, Michiel, Alexander**
**9000 GHENT (BE)**
• **LEMMENS, Rien, Denise, M.**
**2530 BOECHOUT (BE)**
• **BAEKELANDT, Maxime**
**9000 Gent (BE)**

(74) Representative: **Ducreux, Marie
Société des Produits Nestlé S.A.
Avenue Nestlé 55
1800 Vevey (CH)**

(56) References cited:
**WO-A1-2007/038113     WO-A1-2020/033469
WO-A1-2020/084134     WO-A1-2020/112951
US-A- 1 547 655       US-A1- 2004 074 400
US-A1- 2008 089 986**

**EP 4 266 907 B1**

**Description**

**Field of the invention**

The present invention relates to relates to apparatuses for roasting coffee beans in a safe environment.

**Background of the invention**

The roasting of coffee beans is a well-known process. The main steps consists in heating the beans to a desired roasting level and then cooling or quenching the heated beans to stop the roasting. During heating, smoke is emitted. This smoke contains safe and desired components all together, in particular the usual roasted coffee aroma, but also undesired less safe volatile organic compounds (VOC) VOC such as pyridine, 2-furane methanol, caffeine furfural, formaldehyde, acetaldehyde, ... and particulate matter ($PM_{2.5}$, $PM_{10}$), ...

When roasting is implemented in manufacturing places producing important quantities of roasted beans, generally all the conditions for catching unsafe components are supplied.

But, there is a recent trend to implement small batch roasting with small roasters in shops, restaurants and coffees where customers are able to consume coffee brewed from freshly roasted beans. The roaster does not only provide freshness and theater advantages, but also dispenses the pleasant roasted coffee aroma inside the shop or coffee.

Yet, as mentioned above, harmful components are emitted too. When the roaster is used in a closed environment like a shop, coffee or restaurant, the emission of some components can become harmful depending on the size of the room, the ventilation of the room, ... For people working several hours in the room, smelling the smokes of the roaster can lead to a health problem.

As a result, in such an environment, it is recommended to stop the emission of smoke from the roaster to avoid any healthy issue for people present in the shop. Various types of smoke treating units exist ; they can consist in destroying contaminants, such as an afterburner enabling thermal oxidation of contaminants or a catalytic afterburner or in retaining contaminants inside the apparatus like mechanical filters (metallic sieves or paper filter), an active carbon filter or an electrostatic precipitator or combination thereof.

Generally, a connecting device such as a duct is supplied to collect the smoke produced at the outlet of the roaster and to drive said smoke through the filter device(s) of the smoke treating unit. This duct requires regular cleaning because it is positioned upstream the filtering device(s) and greasy deposits stick to the internal walls.

During cleaning maintenance, this duct is dismounted and washed and then re-installed inside the smoke treating unit. Yet, the operator may forget to re-install this duct or a part of this duct for different reasons : the duct can be made of several dismountable pieces, some of these pieces can be particularly small, the operator may not be a trained person, the duct may be covered by external panels that prevent the operator to do a final check before operating the system.

If the duct is missing, during the first roasting operation after maintenance, produced smoke will enter the room without filtration. Although there is minimal user hazard from the emissions of one roast, and the failure will quickly be detected due to the excessive smoke in the room, this is not acceptable in a place like a shop, café or restaurant.

It is necessary to warn the operator as early as possible so that he/she is able to stop the roasting operation and is able to re-install the duct and re-start the operation.

Roasting systems with smoke treating units comprising a filter are known e.g. from WO2020/112951 A1 and WO2007/038113A1.

**Summary of the invention**

An object of the invention is to address the above existing problem.

In particular, an object of the invention is to address the problem of informing the operator that a part of the collecting duct of the smoke filter is absent.

It would be advantageous to provide a method to enable the roasting operator to be informed of the absence of the duct or a part of the duct without adding sensors specific to that duct.

In a first aspect of the invention, there is provided a method to check a roasting system, said system comprising :

- a roasting apparatus, said apparatus producing smoke during the heating of coffee beans, and
- a smoke treating unit configured to treat the flow of smoke produced by the roasting apparatus, said smoke treating unit comprising :

  • at least one smoke filtering device,

- a dismountable smoke collecting device configured to collect smoke from the outlet of the roasting apparatus
- at least one temperature sensor configured to measure the temperature T of the flow of smoke inside the smoke treating unit,
- a smoke driver configured to drive smoke from the roasting apparatus through said smoke treating unit,

wherein, during a roasting operation implemented in the roasting apparatus, the method comprises the steps of:

- operating the roasting apparatus in order to produce hot gas,
- monitoring the temperature of the smoke during the operation, and
- observing at least one behaviour of the monitored temperature along time,
- comparing said at least one observed behaviour of the monitored temperature with a predetermined behaviour of temperature corresponding to the presence of the dismountable smoke collecting device inside the smoke treating unit,
- if the at least one observed behaviour diverges from the corresponding predetermined behaviour, then displaying an alarm.

The method relates to the roasting of coffee beans by means of a system that comprises two apparatuses : first, the roasting apparatus in which beans are heated to be roasted and, secondly, the smoke treating unit configured to treat the smoke generated inside the first roasting apparatus during the roasting of the coffee beans.

The two apparatuses can be sub-parts of one single main system or alternatively, the two apparatuses can be conceived as separated modules cooperating together during the process of roasting.

Any type of roasting apparatus can be used. In the roasting apparatus, coffee beans are heated and preferably mixed to homogenise heating through the beans.

The source of heating can be a burner (meaning combustion) fed by natural gas, liquefied petroleum gas (LPG) or even wood. Alternatively the heat source can be an electrical resistor, a ceramic heater, a halogen source, a source of infrared or of microwaves.

Preferably the source of heating is electrically powered so that the air contaminants produced during the roasting are contaminants generated from the heating of coffee beans themselves only and not from the burning of gases as it happens when the source of heating is a gas burner using natural gas, propane, liquefied petroleum gas (LPG) or even wood.

The mixing of the beans during the roasting operation can be obtained with a fluidic bed of hot air or mechanically with stirring blades or a rotating drum.

Preferably the roasting apparatus is hot air fluid bed chamber. Within such a chamber, heated air is forced through a screen or a perforated plate under the coffee beans with sufficient force to lift the beans. Heat is transferred to the beans as they tumble and circulate within this fluidized bed.

Alternatively the roasting apparatus can be a drum chamber wherein the coffee beans are tumbled in a heated environment. The drum chamber can consist of a drum rotating along a horizontal axis or the drum chamber can comprise stirring blades to tumble the coffee beans in a heated environment.

The roasting apparatus comprises an outlet from which smoke produced during the roasting operation can be evacuated.

The smoke treating unit treats the smoke in order to reduce or eliminate harmful contaminants the smoke contains.

This smoke treating unit can comprise at least one filtering device configured for filtering particulate matters or PM, volatile organic compounds or VOCs and/or hydrocarbons.

Preferably, the smoke treating unit comprises at least one filtering device in the list of : a high efficiency particulate accumulator filter, a metallic filter, an electrostatic precipitator, an active carbon filter, paper filter, cotton, cloth. Optionally, the smoke treating unit can comprise additional filtering devices like wet-scrubbers, catalytic converters, afterburners.

Filters configured for trapping VOCs are preferably active carbon filter or charcoal filter. Preferably the smoke treating unit comprises several filters depending on their ability to retain specific contaminants.

The smoke is driven inside the smoke treating unit and the filtering devices by means of a smoke driver configured to circulate smoke through the smoke treating unit from the smoke collecting device to an outlet of the smoke treating unit. At the outlet, the smoke can be safely released inside the atmosphere of a room since the contaminants have been trapped.

The smoke driver is generally a fan driving the smoke to the outlet.

Preferably the fan is positioned next to the outlet of the smoke treating unit. As a result, the fan is not contaminated by the non-treated smoke and its maintenance is easier.

The smoke treating unit of the system comprises a smoke collecting device configured to collect smoke from the outlet of the roasting apparatus and lead the smoke to the filtering devices. Usually this smoke collecting device cooperates with the smoke outlet of the roasting apparatus. This smoke collecting device is removable from the smoke treating unit for maintenance, and in particular cleaning. Due to its upstream position inside the smoke treating unit, it is the first part in contact with the hot smoke emitted by the roaster and rapidly becomes the dirtiest part of the smoke treating unit.

This collecting device can comprise an air inlet device configured to mix the smoke produced by the roasting apparatus with ambient air in order to control the temperature of the smoke flowing through the smoke filtering sub-unit. This control of the temperature can be necessary when the operational efficiency of some of the filtering devices of the smoke treating unit depends directly on a range of temperature. For example that is the case for an active carbon filter which is preferably operated at a temperature below 60°C.

When the collecting device comprises an air inlet device, ambient air can be taken directly from the room where the system is installed.

Usually, this dismountable collecting device comprises several dismountable sub-elements which when assembled together form the collecting device. In particular, the collecting device can comprise the following sub-elements: an adapter for the roasting apparatus, elbow(s) and straight duct(s), the above mentioned air inlet device, adapter(s) for attaching said pieces one to the others.

The smoke treating unit comprises at least one temperature sensor configured to measure the temperature T inside the smoke treating unit.

Preferably this temperature sensor is positioned downstream the collecting device according to the direction of the flow of smoke inside the smoke treating unit.

The temperature sensor can be any sensor configured to measure a temperature. This sensor can be configured for the measure of temperature only or this sensor can be a multi-sensor component able to measure various other parameters than temperature like humidity, pressure, VOCs content. Examples of such sensors are air or gas sensors.

In order to check the roasting system and in particular the presence, by default the absence, of the connecting device, the method comprises the steps of :

- operating the roasting apparatus in order to produce hot gas,
- monitoring the temperature of the smoke during the operation, and
- observing at least one behaviour of the monitored temperature along time,
- comparing said at least one observed behaviour of the monitored temperature with a predetermined behaviour of temperature corresponding to the presence of the dismountable smoke collecting device inside the smoke treating unit,
- if the at least one observed behaviour diverges from the corresponding predetermined behaviour, then displaying an alarm.

It has been observed that when hot smoke of the roasting apparatus or any other hot gas, in particular hot air, is passed in the smoke treating unit that, is fully operable, the temperature inside the smoke treating unit rises rapidly from the beginning of this operation. On the contrary, if the removable collecting device is not positioned inside the smoke filtering unit, it has been observed that the rate of rise of temperature is far lower at the beginning of this operation.

Consequently, by observing at least one behaviour of the monitored temperature along time and comparing that behaviour with a predetermined behaviour, the risk that the removable collecting device is not present is high and a corresponding alarm can be displayed to request the operator to check the presence of the collecting device inside the smoke treating unit.

By behaviour of the monitored temperature along time, it is meant a parameter directly linked to temperature or a function of the monitored temperature.

The step of operating the roasting apparatus in order to produce hot gas can be a coffee beans roasting operation, an operation of pre-warming of the roasting apparatus or an operation of checking after an operation of maintenance of the smoke treating unit.

Whatever the operation, hot gas is produced by operating the heating means of the roasting apparatus. If coffee beans are present in the chamber, the hot gas will be the smoke produced by the heating of the beans. If no coffee beans are present in the chamber, the hot gas will be hot air. That can happen during an operation of pre-warming of the roasting system or an operation of checking of the roasting system, for example after a maintenance operation, such as a cleaning operation of the smoke collecting device.

The pre-warming is a heating operation implemented with the roasting apparatus void of beans and configured to bring the roasting apparatus at an optimal operating temperature before starting a roasting of beans.

Usually, when the method is applied while operating a coffee beans roasting operation, this roasting operation is the first operation after a maintenance operation of the dismountable smoke collecting device.

Indeed, it is important to know from the first operation implemented after a cleaning or maintenance operation of the smoke treating unit that at least a part of the smoke collecting device is absent.

In addition, the method is all the more efficient if the smoke treating unit is at ambient temperature at the beginning of the step of monitoring the temperature. The operator can be immediately informed of the absence of a part of the smoke collecting device and can be prevented from launching a new roasting operation without having checked, and if necessary re-installed, the smoke collecting device inside the smoke filtering unit.

The behaviour of the monitored temperature that is observed can be of different types.

In one simplest mode of the method :

- the observed behaviour of the monitored temperature is the temperature along time, and
- the temperature monitored at at least one time $t_0$ is compared to a pre-determined temperature $T_0$ associated to that time $t_0$, and
- if the temperature T at time $t_0$ is inferior to the pre-determined temperature $T_0$ then the alarm is displayed.

In another preferred mode,

- the observed behaviour of the monitored temperature is the rate of rise $R = \dfrac{dT}{dt}$ of the monitored temperature, and
- the rate of rise R of the monitored temperature is calculated at at least one time $t_0$ and compared to a pre-determined rate of rise $R_0$ associated to that time $t_0$, and
- if the calculated rate of rise R at time $t_0$ is inferior to the pre-determined rate of rise $R_0$ then the alarm is displayed.

In general, compared to the simple difference of temperatures, the rates of rise present the advantage of being less prone to environmental conditions, to the roasting profile applied to the coffee beans during the roasting operation or even to the fact that some previous roasting operations have already heated the filtering device.

Another advantage is that the analysis of the rate of rise enables an earlier detection of the missing filtering device and the roasting operation can be stopped immediately before the peak of VOCs and PMs appear.

When the step of operating the roasting apparatus in order to produce hot gas is a coffee beans roasting operation, then preferably, the rate of rise is calculated at a time that is before the time the peak of emissions of VOCs and PMs of the beans happens. This moment can vary depending on the type of beans roasted in the roasting apparatus such a green beans or partially pre-roasted beans that is beans having been obtained by heating green coffee beans and stopping said heating process before the end of the first crack.

Before the moment the peak of emissions happens, the difference of rates of rise of the temperature is particularly emphasized between a situation where the collecting device is present and where the collecting device is absent.

Advantageously, the roasting can even be stopped and re-started after installation of the missing collecting device.

Usually the pre-determined temperature $T_0$ associated to the time $t_0$ and the pre-determined rate of rise $R_0$, to which the temperature at time $t_0$ or the rate of rise R at $t_0$ is compared, are set based on experimental data. They are usually linked to the type of smoke filtering unit, the design of the collecting device, such as the internal path for smoke in the collecting device and up to the temperature sensor, the material the smoke filtering unit is made of, the position of the temperature sensor and in particular the presence of filtering devices upstream this temperature sensor at which temperature is monitored.

In one embodiment, the system comprises :

- several smoke treating units, each of said smoke treating units being configured to conduct and treat at least a part of the smoke through a dedicated path, and
- an inlet ducting device to guide smoke emitted by the at least one roasting apparatus to at least one of the smoke treating units.

Within this embodiment, the system comprises several smoke treating units able to treat the smoke of at least one roasting apparatus. Each smoke treating unit defines a specific path for smoke defines by ducting means and including a specific collecting device. One temperature sensor per smoke treating unit can be used to provide information about each collecting device.

In another embodiment, the system comprises :

- several roasting apparatuses, and
- the smoke treating unit is configured to be able to treat the flows of smoke produced by said roasting apparatuses, said smoke treating unit comprising several dismountable smoke collecting device, each of dismountable smoke collecting device being configured to collect smoke from the outlet of one respective roasting apparatus.

In this embodiment, preferably, the method comprises the additional steps of :

- obtaining information relative the number of operated roasters,
- obtaining the predetermined behaviour of temperature corresponding to the presence of all the dismountable smoke collecting devices between said obtained number of operated roasters and the smoke treating unit,
- comparing the observed behaviour of the monitored temperature with said obtained predetermined behaviour of temperature corresponding to the presence of all the dismountable smoke collecting devices.

In a second aspect, there is provided a system for roasting coffee beans, said system comprising :

- a roasting apparatus, and
- a smoke treating unit configured to treat the smoke produced by the roasting apparatus, said smoke treating unit comprising :

  • a dismountable smoke collecting device configured to collect smoke from the outlet of the roasting apparatus
  • a temperature sensor configured to measure the temperature T of the flow of smoke inside the smoke treating unit,

- a smoke driver configured to drive smoke from the roasting apparatus through said smoke treating unit,
- a control system operable to perform the method described above.

Preferably, the roasting apparatus can comprise a display unit in order to display an alarm such as the requirement to check the presence of the collecting device. The display can be visual and/or a sound.

Preferably, the smoke treating unit can comprise at least one other filtering device than the active carbon filter. This other filtering device can be comprised in the list of : a high efficiency particulate accumulator filter, a metallic filter, an electrostatic precipitator, paper filter, cotton, cloth. Optionally, the smoke treating unit can comprise additional filtering devices like wet-scrubbers, catalytic converters, afterburners.

Preferably, the smoke filtering sub-unit comprises successively, according to the direction of the flow of the smoke inside the smoke treating unit, at least one filter to remove particulate matters and then an electrostatic precipitator and then the active carbon filter. This order prevents the active carbon filter from being clogged by particulate matters.

The smoke is driven inside the smoke treating unit and the different filters by means of the smoke driver configured to circulate smoke through the smoke treating unit from the inlet to the outlet of the smoke treating unit. At the outlet, the treated flow can be safely released inside the atmosphere of a room since the smoke and the contaminants have been trapped.

The smoke driver is generally a fan driving the smoke to the outlet.

Preferably the fan is positioned next to the outlet of the smoke treating unit. As a result, the fan is not contaminated by the non-treated smoke and its maintenance is easier.

According to one preferred embodiment, the smoke filtering sub-unit comprises at least successively :

- a metallic mesh, then
- an electrostatic precipitator, and then
- the active carbon filter according to the movement of the flow of the smoke inside the smoke treating unit.

Preferably within this embodiment, the active carbon filter is positioned physically above the electrostatic precipitator. Accordingly, the smoke is introduced upwardly through the successive devices.

Depending on the integration of the roasting apparatus and the smoke treating unit, the control system can be shared between both apparatuses and the steps of the method can be shared between the processing units of at least these two apparatuses.

In one embodiment, the method can be executed by the processing unit of the roasting apparatus and by the processing unit of the smoke treating unit, both processing units communicating together. In particular:

- the processing unit of the smoke treating unit can implement the steps of:

  . monitoring the temperature,
  . observing and comparing the behaviour of the monitored temperature to a predetermined behaviour,
  . if necessary ordering the display of an alarm to the roasting apparatus,

- the processing unit of the roasting apparatus can implement the steps of:

. operating the roasting apparatus in order to produce hot gas,
. displaying the cleaning alarm.

In another embodiment,

- the processing unit of the smoke treating unit can implement the steps of:

    . monitoring the temperature,
    . communicating the values of said monitored temperature to the roasting apparatus, and

- the processing unit of the roasting apparatus can implement the steps of:

    . operating the roasting apparatus in order to produce hot gas,
    . observing and comparing the behaviour of the monitored temperature to a predetermined behaviour,
    . if necessary displaying the cleaning alarm.

In another embodiment, the processing unit of the smoke treating unit can implement all the steps, except the operation of the roasting apparatus in order to produce hot gas, after receiving information that said operation is starting from the roasting apparatus.

Preferably, the roasting apparatus can comprise a display unit in order to display the alarm. Alternatively, the smoke treating unit can comprise a device to display the alarm such as a lighting button and/or a sound and/or a voice message.

In another alternative, the control system can be configured to display the alarm on a mobile device in communication with the system.

In a third aspect, there is provided a computer program comprising instructions to cause the system described above to perform the method such as described above.

In one embodiment, the computer program can be executed by the processing unit of the roasting apparatus and by the processing unit of the smoke treating unit, both processing units communicating together. In particular:

- the processing unit of the smoke treating unit can implement the steps of:

    . monitoring the temperature,
    . observing and comparing the behaviour of the monitored temperature to a predetermined behaviour,
    . if necessary ordering the display of an alarm to the roasting apparatus,

- the processing unit of the roasting apparatus can implement the steps of:

    . operating the roasting apparatus in order to produce hot gas,
    . displaying the cleaning alarm.

In another embodiment,

- the processing unit of the smoke treating unit can implement the steps of:

    . monitoring the temperature,
    . communicating the values of said monitored temperature to the roasting apparatus, and

- the processing unit of the roasting apparatus can implement the steps of:

    . operating the roasting apparatus in order to produce hot gas,
    . observing and comparing the behaviour of the monitored temperature to a predetermined behaviour,
    . if necessary displaying the cleaning alarm.

In another embodiment, the processing unit of the smoke treating unit can implement all the steps, except the operation of the roasting apparatus in order to produce hot gas, after receiving information that said operation is starting from the roasting apparatus.

In a fourth aspect, there is provided a computer readable storage medium having stored thereon the above computer program.

In the present application, the term "several" means at least two.

The invention is defined in the claims. Embodiments are illustrated and described in the following.

## Brief description of the drawings

Specific embodiments of the invention are now described further, by way of example, with reference to the following drawings in which :

- Figures 1 and 2 are views of a system according to the present invention illustrating the path of the smoke through the system,
- Figure 3 shows a block diagram of a control system of the system according to Figure 1,
- Figures 4 illustrates the evolution of the rate of rise of temperature with the collecting device present or not,
- Figure 5 illustrates a system of one roasting apparatuses and several smoke treating units according to the invention.

## Detailed description of exemplary embodiments

System for roasting

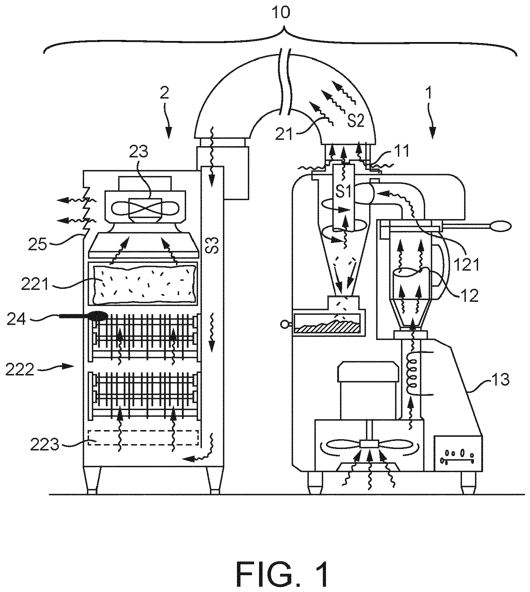

**Figure 1** shows an illustrative view of a system of a roasting apparatus 1 and a smoke treating unit 2. Functionally, the roasting apparatus is operable to roast coffee beans and the smoke treating unit is operable to treat the smoke generated during roasting by the roasting apparatus.

Roasting apparatus

The roasting apparatus 1 is operable to receive and roast coffee beans inside a roasting chamber 12.

Preferably, the roasting apparatus 1 comprises a roasting chamber 12 in which a flow of hot air is introduced to agitate and heat the beans. The hot air flow is usually produced by an air flow driver and a heater. These devices are positioned below the roasting chamber and introduce the flow of hot air through the bottom of the chamber. In the illustrated figure, the bottom of the chamber is configured to enable air to pass through, specifically it can be a perforated plate on which the beans can lie and through which air can flow upwardly.

The air flow driver is operable to generate a flow of air upwardly in direction of the bottom of the vessel. The generated flow is configured to heat the beans and to agitate and lift the beans. As a result, the beans are homogenously heated. Specifically, the air flow driver can be a fan powered by a motor. Air inlets can be provided inside the base of the housing in order to feed air inside the housing, the air flow driver blowing this air in direction of the chamber 12.

The heater is operable to heat the flow of air generated by the air flow driver. Preferably, the heater is an electrical resistance positioned between the fan and the perforated plate with the result that the flow of air is heated before it enters the chamber 12 to heat and to lift the beans. The heater and/or the fan are operable to apply a roasting profile to the beans, this roasting profile being defined as a curve of temperature against time.

Preferably, the roasting apparatus comprises a user interface 13 enabling :

- the input of information about the roasting, in particular the quantity of beans introduced inside the roasting chamber and the desired level of roasting, and the output of information about the roasting operation (status, temperature, time) and
- preferably about the output of information about the smoke treating unit 2 in particular about the cleaning of the electrostatic precipitator 222.

The roasting of the beans generates a smoke that is driven to the top opening 121 of the roasting chamber due to the flow of air generated by the air flow driver and as illustrated by arrow S1 in Figure 1.

Generally a chaff collector is in flow communication with the top opening 121 of the chamber to receive chaffs that have progressively separated from the beans during roasting and due to their light density are blown off to the chaff collector.

The rest of the smoke is evacuated through the smoke outlet 11 at the top of the roasting apparatus.

Smoke treating unit

The smoke treating unit 2 is operable to receive and treat the smoke S1 emitted at the smoke outlet 11 of the roasting apparatus.

First, the smoke treating unit 2 comprises a smoke collecting device 21 adapted to collect the smoke. This smoke collecting device 21 or collecting device forms an internal void space or duct guiding the smoke (dotted lines S1, S2, S3) from the outlet 11 of the roasting apparatus in direction of the filtering devices of the smoke filtering sub-unit 22.

In the particularly illustrated embodiment, the smoke filtering sub-unit 22 can comprise :

- a device 223 adapted for filtering large particulate matter like PM 10, for example a metallic mesh and an associated diffuser, generally a metallic grid positioned in front (that is upstream) of the mesh.
- an electrostatic precipitator 222 adapted for filtering small particulate matter,
- an active carbon filter 221 adapted to remove VOCs from the smoke.

Preferably, the device for removing particulate matter are positioned upstream the active carbon filter. This upstream position guarantees that particulate matter do not foul the active carbon filter.

Physically, the electrostatic precipitator is positioned below the active carbon filter to avoid that particulates fall from the electrostatic precipitator on the active carbon filter when the electrostatic precipitator is switched off.

The smoke filtering sub-unit 22 comprises a smoke driver 23, generally a fan, for sucking the contaminated smoke from the inlet 211 of the collecting device through the smoke filtering sub-unit 22, where it is treated, to the outlet 25 of the smoke filtering sub-unit 22, where it is dispensed in ambient atmosphere safely.

The smoke filtering sub-unit 22 comprises a temperature sensor 24 positioned just upstream the active carbon filter and configured to measure the temperature of the smoke.

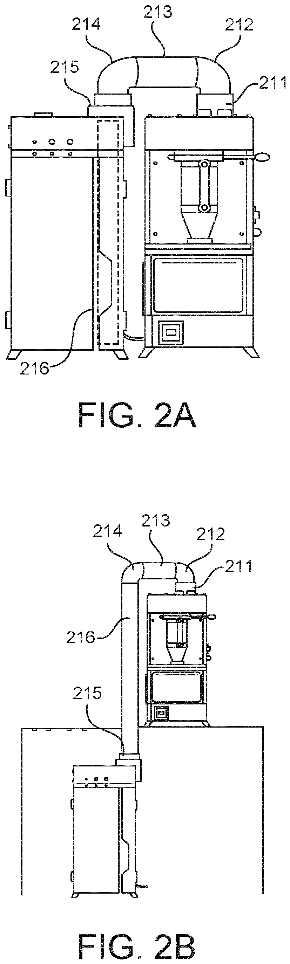

**Figure 2A** illustrates more precisely the different sub-parts 211, 212, 213, 214, 215, 216 of collecting device of Figure 1. When they are assembled, all these sub-parts design the path of the smoke from the outlet 11 of the chamber of the roasting apparatus to the filtering devices 221, 222, 223 of the smoke treating unit. These parts can be dismantled for cleaning and maintenance.

The collecting device comprises different sub parts with different designs and functions, including :

- an air inlet device 211. This device enables the connection with the chamber outlet 11 and is provided with lateral openings for the introduction of air and its mixing with smoke of the roaster.
- two elbow ducts 212, 214 and straight duct 213,
- a connecting element 215 with a final duct 216 (dotted lines). This final duct is hidden behind a side panel of the smoke treating unit which made him non visible once the panel is in place. Further to the disassembling of the collecting device and then re-assembling, some parts may be missing such as the smallest connecting elements 211, 215 or the hidden ones like the final duct 216.

Figure 2B illustrates an alternative embodiment of the roasting system of Figures 1 and 2A, where the resting apparatus is placed on a counter and the smoke treating unit below said counter. In this configuration, the small connecting device 215 is also hidden below the counter and the operator can forget to re-assemble this part of the collecting device.

Control System of the system of the roasting apparatus and the smoke treating unit

With reference to **Figures 1, 2 and 3,** the control system 3 will now be considered : the control system 3 is operable to control the smoke filtering unit 2.

Depending on the level of integration of the roasting apparatus 1 and the smoke filtering unit 2, the control system can be shared between the processing units of these two apparatuses :

- if the smoke treating unit 2 is part of the roasting apparatus 1, usually the processing unit of the roasting apparatus is the master and the processing unit of the filter is the slave.
- if the roasting apparatus 1 and the smoke treating unit 2 form two different apparatuses, each of them with its own processing unit, then these processing units can be configured to communicate to implement the method.

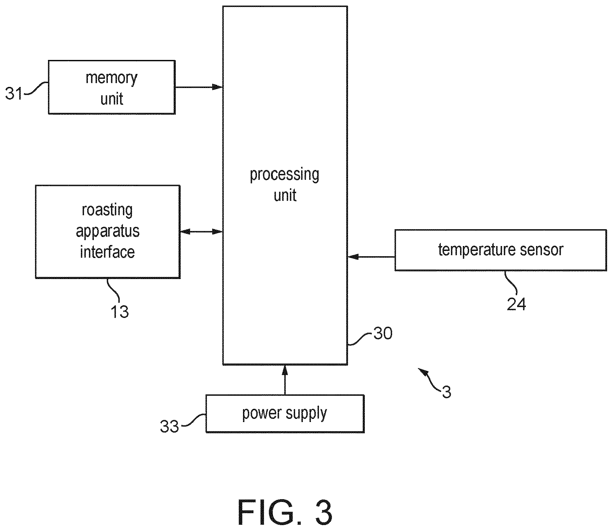

**Figure 3** illustrates the control system of the smoke filtering unit 2 of Figure 1.

The control system 3 typically comprises at a second level of smoke filtering unit 2 : a processing unit 30, a power supply 33, a memory unit 31.

The processing unit 30 is configured to output feedback to the user interface 13 of the roasting apparatus in particular to display an alarm related to the detection of the absence of the smoke collecting device. In an alternative configuration, the some treating unit 2 can comprise its own user interface to display this information, for example lighting buttons that can be lighted according to the presence or not of the smoke collecting device.

The processing unit 30 may also display information to the user interface 13 about :

- re-installing instructions,

- reset of the alarm status.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 20 can be formed as one unit or a plurality of discrete units.

A part of the user interface can also be on a mobile app when the apparatus is provided with a communication interface as described below. In that case at least a part of input and output can be transmitted to the mobile device through the communication interface 32.

The processing unit 30 generally comprises memory, input and output system components arranged as an integrated circuit, typically as a microprocessor or a microcontroller. The processing unit 30 may comprise other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programmed logic or to additionally comprise programmed logic. The processing unit 30 may also comprise one or more of the aforementioned integrated circuits. An example of the later is several integrated circuits arranged in communication with each other in a modular fashion e.g. : a slave integrated circuit to control the smoke treating unit 2 in communication with a master integrated circuit to control the roasting apparatus 10, a slave integrated circuit to control the user interface 13 in communication with a master integrated circuit to control the roasting apparatus 10.

The power supply 33 is operable to supply electrical energy to the said controlled components and the processing unit 30. The power 33 may comprise various means, such as a battery or a unit to receive and condition a main electrical supply.

The processing unit 30 generally comprises a memory unit 31 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic. The instructions stored on the memory unit 31 can be idealised as comprising a program to determine the presence of the active carbon filter in the smoke treating unit of the system and in particular the cleaning status requirement.

The processing unit 30 is configured to output the value of the temperature T measured by the temperature sensor 24.

The control system 3 is operable :

- to operate the roasting apparatus in order to produce hot gas,
- to monitor the temperature of the smoke during said operation, and
- to observe at least one behaviour of the monitored temperature along time,
- to compare said at least one observed behaviour of the monitored temperature with a predetermined behaviour of temperature corresponding to the presence of the dismountable smoke collecting device inside the smoke treating unit,
- to displaying an alarm if the at least one observed behaviour diverges from the corresponding predetermined behaviour.

Preferably, the control system 3 is operable :

- to calculate the rate of rise $R = \dfrac{dT}{dt}$ of the monitored temperature at at least one time $t_0$ , and
- to compare said rate to a pre-determined rate of rise $R_0$ associated to that time $t_0$, and
- if the calculated rate of rise R at time $t_0$ is inferior to the pre-determined rate of rise $R_0$ then
- to display and alarm.

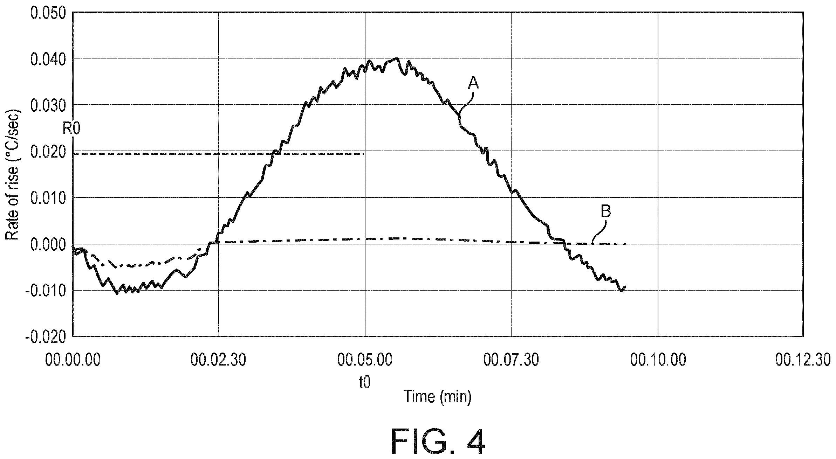

**Figure 4** illustrates the rates of rise of the temperature measured by the sensor 24 during the first roasting operation implemented after a maintenance operation of the collecting device 21 of the roasting apparatus illustrated in Figures 1 and 2A. The beginning of the roasting operation starts at t = 0.

In curve A, temperature was measured with the collecting device 21 correctly re-installed inside the smoke treating unit whereas, in curve B, temperature was measured while the subpart 221 of the collecting device 21 was missing.

At $t_0$ = 5 minutes, the curve A presents a rate of rise of 0.040 °C/sec and it can be observed that, as soon as the roasting operation starts, the temperature rises at the temperature sensor 24 positioned inside the smoke treating unit.

On the contrary, at $t_0$ = 5 minutes, in curve B, the rate of rise remains null.

Accordingly, by setting a pre-determined rate of rise $R_0$ at 0.020 °C/sec, the absence of a part of the collecting device can be detected by measuring the rate of rise of temperature inside the smoke treating unit and if the rate of rise is similar to Curve b, an alarm requiring the check of the collecting device is raised.

This threshold is pre-determined through experimentations and, as mentioned above, this predetermined threshold can be stored in the memory 31 of the control system.

Update of this threshold can be applied if the configuration of the collecting device 21 changes in the roasting system, for example, this threshold would be different with the collecting device 21 of the roasting apparatus illustrated in Figures 1 and 2B.

The setup linked to the configuration can be changed either through a manual input through the user interface (either of the system or of a mobile device) or through a remote server and the communication interface 32.

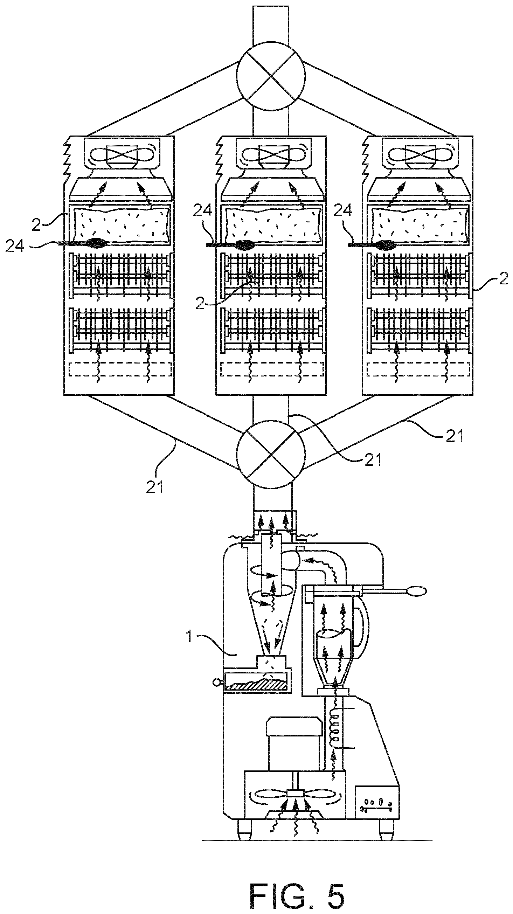

**Figure 5** illustrates a system comprising several smoke treating units 3. Such a configuration can be adapted to the treatment of an important volume of smoke, for example due to continuous roasting operations. The smoke outlet of the roasting apparatuses is connected to several connecting devices 21 configured to guide smoke to at least one of the smoke treating units 3. Smoke can be sent to one of the three smoke treating units while the others are on maintenance or cleaned. In each smoke treating unit, the corresponding temperature sensors 24 enables the detection of the missing corresponding collecting device at the inlet of the smoke treating units 3 in a similar manner as in Figure 1. enable

One advantage of the method is that it can be implemented with a temperature sensor that is not specifically dedicated to the implementation of that method. Temperature sensors positioned inside the smoke treating unit for other process controls can be used additionally to provide information about the presence of an essential part of the smoke treating unit after a maintenance operation. An error in re-installation of the collecting device can be detected with existing temperature sensors rather than adding sensors specifically dedicated to the detection of the presence of a part of he collecting device such as a sensor establishing contact with said device (such as a switch contact), an optical sensor, a sensor able to read the field of a magnetic element of the device, an RFID device able to read an RFID tag of the device.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

<div align="center">List of references in the drawings :</div>

| | | |
|---|---|---|
| roasting apparatus | | 1 |
| | smoke outlet | 11 |
| | roasting chamber | 12 |
| | | top outlet | 121 |
| | user interface | 13 |
| smoke treating unit | | 2 |
| | smoke collecting device | 21 |
| | sub-parts | 211, 212, 213, 214, 215, 216 |
| | smoke filtering sub-unit | 22 |
| | | active carbon filter | 221 |
| | | electrostatic precipitator | 222 |
| | | PM filter | 223 |
| | smoke driver | 23 |
| | outlet | 25 |
| | temperature sensor | 24 |
| control system | | 3 |
| processing unit | | 30 |
| memory unit | | 31 |
| power supply | | 33 |
| system | | 10 |

**Claims**

1. A method to check a roasting system (10) ), said system comprising :

   - a roasting apparatus (2), said apparatus producing smoke during the heating of coffee beans, and
   - a smoke treating unit (3) configured to treat the flow of smoke produced by the roasting apparatus, said smoke treating unit comprising :

     . at least one smoke filtering device (221, 222, 223),
     . a dismountable smoke collecting device (21) configured to collect smoke from the outlet (11) of the roasting apparatus
     . at least one temperature sensor (24) configured to measure the temperature T of the flow of smoke inside the smoke treating unit (3),
     . a smoke driver (23) configured to drive smoke from the roasting apparatus (2) through said smoke treating unit,

   wherein, during a roasting operation implemented in the roasting apparatus, the method comprises the steps of:

     - operating the roasting apparatus in order to produce hot gas,
     - monitoring the temperature of the smoke during the operation, and
     - observing at least one behaviour of the monitored temperature along time,
     - comparing said at least one observed behaviour of the monitored temperature with a predetermined behaviour of temperature corresponding to the presence of the dismountable smoke collecting device (21) inside the smoke treating unit,
     - if the at least one observed behaviour diverges from the corresponding predetermined behaviour, then displaying an alarm.

2. Method according to Claim 1, wherein the step of operating the roasting apparatus in order to produce hot gas is a coffee beans roasting operation, an operation of pre-warming of the roasting apparatus or an operation of checking after an operation of maintenance of the smoke treating unit.

3. Method according to the precedent claim, wherein the roasting operation implemented in the roasting apparatus is the first operation after a maintenance operation of the dismountable smoke collecting device (21).

4. Method according to any one of the precedent claims, wherein the temperature sensor (24) is positioned downstream the collecting device according to the direction of the flow of smoke inside the smoke treating unit.

5. Method according to any one of the precedent claims, wherein :

     - the observed behaviour of the monitored temperature is the temperature along time, and
     - the temperature monitored at at least one time $t_0$ is compared to a pre-determined temperature $T_0$ associated to that time $t_0$, and
     - if the temperature T at time $t_0$ is inferior to the pre-determined temperature $T_0$ then the alarm is displayed.

6. Method according to any one of Claims 1 to 4, wherein :

     - the observed behaviour of the monitored temperature is the rate of rise $R = \dfrac{dT}{dt}$ of the monitored temperature, and
     - the rate of rise R of the monitored temperature is calculated at at least one time $t_0$ and compared to a pre-determined rate of rise $R_0$ associated to that time $t_0$, and
     - if the calculated rate of rise R at time $t_0$ is inferior to the pre-determined rate of rise $R_0$ then the alarm is displayed.

7. Method according to the precedent claim, wherein the time $t_0$ for calculation of the rate of rise is set before the first crack of the beans happen.

8. Method according to any one of the precedent claims, wherein the dismountable smoke collecting device (21) of the smoke treating unit comprises several dismountable sub-elements, these sub-elements forming the collecting device when assembled together.

9. Method according to any one of the precedent claims, wherein the system comprises :

    - several smoke treating units (3), each of said smoke treating units being configured to conduct and treat at least a part of the smoke through a dedicated path, and
    - an inlet ducting device (21) to guide smoke emitted by the roasting apparatus to at least one of the smoke treating units.

10. Method according to any one of Claims 1 to 8, wherein the system comprises :

    - several roasting apparatuses (3), and
    - the smoke treating unit (3) is configured to be able to treat the flows of smoke produced by said roasting apparatuses, said smoke treating unit comprising several dismountable smoke collecting devices (21), each of dismountable smoke collecting device being configured to collect smoke from the outlet (11) of one respective roasting apparatus.

11. Method according to the precedent claim, wherein the method comprises the additional steps of :

    - obtaining information relative the number of operated roasters,
    - obtaining the predetermined behaviour of temperature corresponding to the presence of all the dismountable smoke collecting devices (21) between said obtained number of operated roasters and the smoke treating unit,
    - comparing the observed behaviour of the monitored temperature with the obtained predetermined behaviour of temperature corresponding to the presence of all the dismountable smoke collecting devices (21).

12. A system (10) for roasting coffee beans, said system comprising :

    - a roasting apparatus (2), and
    - a smoke treating unit (3) configured to treat the smoke produced by the roasting apparatus, said smoke treating unit comprising :

        . a dismountable smoke collecting device (21) configured to collect smoke from the outlet (11) of the roasting apparatus
        . a temperature sensor (24) configured to measure the temperature T of the flow of smoke inside the smoke treating unit (3),

    - a smoke driver (23) configured to drive smoke from the roasting apparatus (2) through said smoke treating unit,
    - a control system (3) operable to perform the method of any one of Claims 1 to 11.

13. A computer program comprising instructions to cause the system of Claim 12 to perform the method of any one of Claims 1 to 11.

14. A computer program according to the precedent claim, wherein said computer program is executed by the processing unit of the roasting apparatus and the processing unit of the smoke treating unit, both processing units communicating together.

15. A computer readable storage medium having stored thereon the computer program of Claim 13.

**Patentansprüche**

1. Verfahren, um ein Röstsystem (10) zu überprüfen, das System umfassend:

    - eine Rösteinrichtung (2), wobei die Einrichtung während des Erhitzens von Kaffeebohnen Rauch erzeugt, und
    - eine Rauchbehandlungseinheit (3), die konfiguriert ist, um den Rauchstrom zu behandeln, der durch die Rösteinrichtung erzeugt wird, die Rauchbehandlungseinheit umfassend:

        . mindestens eine Rauchfiltervorrichtung (221, 222, 223),

. eine abnehmbare Rauchsammelvorrichtung (21), die konfiguriert ist, um Rauch aus dem Auslass (11) der Rösteinrichtung zu sammeln

. mindestens einen Temperatursensor (24), der konfiguriert ist, um die Temperatur T des Rauchstroms innerhalb der Rauchbehandlungseinheit (3) zu messen,

. einen Rauchtreiber (23), der konfiguriert ist, um Rauch aus der Rösteinrichtung (2) über die Rauchbehandlungseinheit zu treiben,

wobei, während eines Röstbetriebs, der in der Rösteinrichtung implementiert wird, das Verfahren die Schritte umfasst:

- Betreiben der Rösteinrichtung, um Heißgas zu erzeugen,
- Überwachen der Rauchtemperatur während des Betriebs, und
- Beobachten mindestens eines Verhaltens der überwachten Temperatur im Laufe der Zeit,
- Vergleichen des mindestens einen beobachteten Verhaltens der überwachten Temperatur mit einem zuvor bestimmten Verhalten von Temperatur, das dem Vorhandensein der abnehmbaren Rauchsammelvorrichtung (21) innerhalb der Rauchbehandlungseinheit entspricht,
- falls das mindestens eine beobachtete Verhalten von dem entsprechenden zuvor bestimmten Verhalten abweicht, dann Anzeigen eines Alarms.

2. Verfahren nach Anspruch 1, wobei der Schritt des Betreibens der Rösteinrichtung, um Heißgas zu erzeugen, ein Kaffeebohnenröstbetrieb, ein Vorwärm betrieb der Rösteinrichtung oder ein Überprüfbetrieb nach einem Wartungsbetrieb der Rauchbehandlungseinheit ist.

3. Verfahren nach dem vorstehenden Anspruch, wobei der Röstbetrieb, der in der Rösteinrichtung implementiert wird, der erste Betrieb nach einem Wartungsbetrieb der abnehmbaren Rauchsammelvorrichtung (21) ist.

4. Verfahren nach einem der vorstehenden Ansprüche, wobei der Temperatursensor (24) gemäß der Richtung des Rauchstroms innerhalb der Rauchbehandlungseinheit stromabwärts der Sammelvorrichtung positioniert ist.

5. Verfahren nach einem der vorstehenden Ansprüche, wobei:

- das beobachtete Verhalten der überwachten Temperatur die Temperatur im Laufe der Zeit ist, und
- die Temperatur, die zu mindestens einem Zeitpunkt $t_0$ überwacht wird, mit einer zuvor bestimmten Temperatur $T_0$ verglichen wird, die diesem Zeitpunkt $t_0$ zugeordnet ist, und
- falls die Temperatur T zu dem Zeitpunkt $t_0$ geringer als die zuvor bestimmte Temperatur $T_0$ ist, dann der Alarm angezeigt wird.

6. Verfahren nach einem der Ansprüche 1 bis 4, wobei:

- das beobachtete Verhalten der überwachten Temperatur die Anstiegsrate $R = \frac{dT}{dt}$ der überwachten Temperatur ist, und
- die Anstiegsrate R der überwachten Temperatur zu mindestens einem Zeitpunkt $t_0$ berechnet und mit einer zuvor bestimmten Anstiegsrate $R_0$ verglichen wird, die diesem Zeitpunkt $t_0$ zugeordnet ist, und
- falls die berechnete Anstiegsrate R zu dem Zeitpunkt $t_0$ geringer als die zuvor bestimmte Anstiegsrate $R_0$ ist, dann der Alarm angezeigt wird.

7. Verfahren nach dem vorstehenden Anspruch, wobei der Zeitpunkt $t_0$ für eine Berechnung der Anstiegsrate eingestellt wird, bevor das erste Zerbrechen der Bohnen stattfindet.

8. Verfahren nach einem der vorstehenden Ansprüche, wobei die abnehmbare Rauchsammelvorrichtung (21) der Rauchbehandlungseinheit mehrere abnehmbare Unterelemente umfasst, wobei diese Unterelemente die Sammelvorrichtung ausbilden, wenn sie zusammengefügt sind.

9. Verfahren nach einem der vorstehenden Ansprüche, wobei das System umfasst:

- mehrere Rauchbehandlungseinheiten (3), wobei jede Rauchbehandlungseinheit konfiguriert ist, um mindestens einen Teil des Rauchs über einen geeigneten Weg zu leiten und zu behandeln, und

- eine Einlasskanalvorrichtung (21), um Rauch, der durch die Rösteinrichtung abgegeben wird, zu mindestens einer der Rauchbehandlungseinheiten zu führen.

10. Verfahren nach einem der Ansprüche 1 bis 8, wobei das System umfasst:

- mehrere Rösteinrichtungen (3), und
- die Rauchbehandlungseinheit (3) konfiguriert ist, um in der Lage zu sein, die Rauchströme zu behandeln, die durch die Rösteinrichtungen erzeugt werden, die Rauchbehandlungseinheit umfassend mehrere abnehmbare Rauchsammelvorrichtungen (21), wobei jede der abnehmbaren Rauchsammelvorrichtungen konfiguriert ist, um Rauch aus dem Auslass (11) einer jeweiligen Rösteinrichtung zu sammeln.

11. Verfahren nach dem vorstehenden Anspruch, wobei das Verfahren die zusätzlichen Schritte umfasst:

- Erhalten von Informationen bezüglich der Anzahl von betriebenen Röstmaschinen,
- Erhalten des zuvor bestimmten Verhaltens von Temperatur, das dem Vorhandensein aller abnehmbaren Rauchsammelvorrichtungen (21) zwischen der erhaltenen Anzahl von betriebenen Röstmaschinen und der Rauchbehandlungseinheit entspricht,
- Vergleichen des beobachteten Verhaltens der überwachten Temperatur mit dem erhaltenen zuvor bestimmten Verhalten von Temperatur, das dem Vorhandensein aller abnehmbaren Rauchsammelvorrichtungen (21) entspricht.

12. System (10) zum Rösten von Kaffeebohnen, das System umfassend:

- eine Rösteinrichtung (2), und
- eine Rauchbehandlungseinheit (3), die konfiguriert ist, um den Rauch zu behandeln, der durch die Rösteinrichtung erzeugt wird, die Rauchbehandlungseinheit umfassend:
- eine abnehmbare Rauchsammelvorrichtung (21), die konfiguriert ist, um Rauch aus dem Auslass (11) der Rösteinrichtung zu sammeln
- einen Temperatursensor (24), der konfiguriert ist, um die Temperatur T des Rauchstroms innerhalb der Rauchbehandlungseinheit (3) zu messen,
- einen Rauchtreiber (23), der konfiguriert ist, um Rauch aus der Rösteinrichtung (2) über die Rauchbehandlungseinheit zu treiben,
- ein Steuersystem (3), das betriebsfähig ist, um das Verfahren nach einem der Ansprüche 1 bis 11 durchzuführen.

13. Computerprogramm, umfassend Anweisungen, um das System nach Anspruch 12 zu veranlassen, das Verfahren nach einem der Ansprüche 1 bis 11 durchzuführen.

14. Computerprogramm nach dem vorstehenden Anspruch, wobei das Computerprogramm durch die Verarbeitungseinheit der Rösteinrichtung und die Verarbeitungseinheit der Rauchbehandlungseinheit ausgeführt wird, wobei beide Verarbeitungseinheiten miteinander kommunizieren.

15. Computerlesbares Speichermedium, das das Computerprogramm nach Anspruch 13 darauf gespeichert aufweist.

**Revendications**

1. Procédé permettant de vérifier un système de torréfaction (10), ledit système comprenant :

- un appareil de torréfaction (2), ledit appareil produisant des fumées au cours du chauffage de grains de café, et
- une unité de traitement des fumées (3) configurée pour traiter le flux de fumées produit par l'appareil de torréfaction, ladite unité de traitement des fumées comprenant :

. au moins un dispositif de filtrage des fumées (221, 222, 223),
. un dispositif de collecte des fumées démontable (21) conçu pour collecter des fumées provenant de la sortie (11) de l'appareil de torréfaction
. au moins un capteur de température (24) configuré pour mesurer la température T du flux des fumées à l'intérieur de l'unité de traitement des fumées (3),

. un dispositif d'entraînement de fumées (23) conçu pour entraîner les fumées de l'appareil de torréfaction (2) à travers ladite unité de traitement des fumées,

dans lequel, au cours d'une opération de torréfaction mise en oeuvre dans l'appareil de torréfaction, le procédé comprend les étapes consistant à :

- faire fonctionner l'appareil de torréfaction afin de produire un gaz chaud,
- surveiller la température des fumées au cours de l'opération, et
- observer au moins un comportement de la température surveillée au fil du temps,
- comparer ledit au moins un comportement observé de la température surveillée avec un comportement prédéterminé de température correspondant à la présence du dispositif de collecte des fumées démontable (21) à l'intérieur de l'unité de traitement des fumées,
- si l'au moins un comportement observé s'écarte du comportement prédéterminé correspondant, alors afficher une alarme.

2. Procédé selon la revendication 1, dans lequel l'étape consistant à faire fonctionner l'appareil de torréfaction afin de produire un gaz chaud est une opération de torréfaction de grains de café, une opération de préchauffage de l'appareil de torréfaction ou une opération de vérification après une opération de maintenance de l'unité de traitement des fumées.

3. Procédé selon la revendication précédente, dans lequel l'opération de torréfaction mise en oeuvre dans l'appareil de torréfaction est la première opération après une opération de maintenance du dispositif de collecte des fumées démontable (21).

4. Procédé selon l'une quelconque des revendications précédentes, dans lequel le capteur de température (24) est positionné en aval du dispositif de collecte selon la direction du flux de fumées à l'intérieur de l'unité de traitement des fumées.

5. Procédé selon l'une quelconque des revendications précédentes, dans lequel :

- le comportement observé de la température surveillée est la température au fil du temps, et
- la température surveillée à au moins un moment $t_0$ est comparée à une température prédéterminée $T_0$ associée à ce moment $t_0$, et
- si la température T au moment $t_0$ est inférieure à la température $T_0$ prédéterminée, alors l'alarme est affichée.

6. Procédé selon l'une quelconque des revendications 1 à 4, dans lequel :

- le comportement observé de la température surveillée est le taux d'augmentation $R = \frac{dT}{dt}$ de la température surveillée, et
- la vitesse d'augmentation R de la température surveillée est calculée à au moins un moment $t_0$ et comparée à une vitesse d'augmentation $R_0$ prédéterminée associée à ce moment $t_0$, et
- si la vitesse d'augmentation R calculée au moment $t_0$ est inférieure à la vitesse d'augmentation $R_0$ prédéterminée, alors l'alarme est affichée.

7. Procédé selon la revendication précédente, dans lequel le moment $t_0$ pour le calcul de la vitesse d'augmentation est réglé avant que le premier craquement des grains ne se produise.

8. Procédé selon l'une quelconque des revendications précédentes, dans lequel le dispositif de collecte des fumées démontable (21) de l'unité de traitement des fumées comprend plusieurs sous-éléments démontables, ces sous-éléments formant le dispositif de collecte lorsqu'ils sont assemblés.

9. Procédé selon l'une quelconque des revendications précédentes, dans lequel le système comprend :

- plusieurs unités de traitement des fumées (3), chacune desdites unités de traitement des fumées étant configurée pour entraîner et traiter au moins une partie des fumées par un chemin dédié, et
- un dispositif de conduit d'entrée (21) pour guider les fumées émises par l'appareil de torréfaction vers au moins l'une parmi les unités de traitement des fumées.

**10.** Procédé selon l'une quelconque des revendications 1 à 8, dans lequel le système comprend :

- plusieurs appareils de torréfaction (3), et
- l'unité de traitement des fumées (3) est configurée pour pouvoir traiter les flux de fumées produits par lesdits appareils de torréfaction, ladite unité de traitement des fumées comprenant plusieurs dispositifs de collecte des fumées démontables (21), chacun des dispositifs de collecte des fumées démontables étant conçu pour collecter des fumées provenant de la sortie (11) d'un appareil de torréfaction respectif.

**11.** Procédé selon la revendication précédente, dans lequel dans le procédé comprend les étapes supplémentaires consistant à :

- obtenir des informations relatives au nombre de machines de torréfaction en fonctionnement,
- obtenir le comportement prédéterminé de température correspondant à la présence de tous les dispositifs de collecte des fumées démontables (21) entre ledit nombre obtenu de machines de torréfaction en fonctionnement et l'unité de traitement des fumées,
- comparer le comportement observé de la température surveillée avec le comportement prédéterminé obtenu de température correspondant à la présence de tous les dispositifs de collecte des fumées démontables (21).

**12.** Système (10) permettant de torréfier des grains de café, ledit système comprenant :

- un appareil de torréfaction (2), et
- une unité de traitement des fumées (3) configurée pour traiter les fumées produites par l'appareil de torréfaction, ladite unité de traitement des fumées comprenant :

    . un dispositif de collecte des fumées démontable (21) conçu pour collecter des fumées provenant de la sortie (11) de l'appareil de torréfaction
    . un capteur de température (24) configuré pour mesurer la température T du flux de fumées à l'intérieur de l'unité de traitement des fumées (3),

- un dispositif d'entraînement de fumées (23) conçu pour entraîner des fumées de l'appareil de torréfaction (2) à travers ladite unité de traitement des fumées,
- un système de commande (3) fonctionnant pour réaliser le procédé selon l'une quelconque des revendications 1 à 11.

**13.** Programme informatique comprenant des instructions pour amener le système selon la revendication 12 à réaliser le procédé selon l'une quelconque des revendications 1 à 11.

**14.** Programme informatique selon la revendication précédente, dans lequel ledit programme informatique est exécuté par l'unité de traitement de l'appareil de torréfaction et l'unité de traitement de l'unité de traitement des fumées, les deux unités de traitement communiquant ensemble.

**15.** Support de stockage lisible par ordinateur sur lequel est stocké le programme informatique selon la revendication 13.

FIG. 1

FIG. 2A

FIG. 2B

FIG. 3

FIG. 4

FIG. 5

**EP 4 266 907 B1**